# EUROPEAN PATENT SPECIFICATION

(11) **EP 1 686 295 B1**
(45) Date of publication and mention of the grant of the patent: **12.12.2012**
(21) Application number: 04792963.3
(22) Date of filing: 26.10.2004
(51) Int. Cl.: F16J 9/26, C21D 1/06, C21D 9/40, C23C 8/26

(54) **THREE PIECE-COMBINED OIL RING**
DREITEILIG KOMBINIERTER ÖLRING
BAGUE DE GRAISSAGE COMBINEE A TROIS PIECES

(30) Priority: 27.10.2003 JP 2003365500
(43) Date of publication of application: 02.08.2006
(73) Proprietor: Riken Corporation, Tokyo 102-0073 (JP)
(72) Inventor: TAKAHASHI, Junya, c/o K.K. Riken Kashiwazaki Plant, Kashiwazaki-shi, Niigata 9450027 (JP); MURAMATSU, Gyo, c/o K.K. Riken Kashiwazaki Plant, Kashiwazaki-shi, Niigata 9450027 (JP); USUI, Miyuki, c/o K.K. Riken Kashiwazaki Plant, Kashiwazaki-shi, Niigata 9450027 (JP)
(74) Representative: Strobel, Wolfgang
(86) International application number: PCT/JP2004/015842
(87) International publication number: WO 2005/040645

(56) References cited:
- WO-A-2004/007789
- JP-A- 5 033 866
- JP-A- 9 209 830
- JP-A- 2002 047 554
- JP-A- 2002 047 554
- JP-A- 2002 310 299
- JP-A- 2002 310 299
- JP-A- 2002 523 689
- JP-A- 2003 028 299
- US-A- 4 407 515

## Description

### Technical Field

The present invention relates to a three-piece type combined oil-control ring, which is mounted on a piston of an internal combustion engine to control lubricating oil. Background Technique

Improvement in the fuel consumption and purification of exhaust gas of an automobile are concerned with protection of the earth environment and are strongly requested. It is, therefore, a crucial task to decrease the friction of the respective parts of an internal combustion engine and to reduce the consumption of engine oil. The piston ring plays an important role for solving the task. The piston rings are designed to decrease tension and hence the friction force. Attempts have been made to decrease tension of an oil-control ring to a level as low as from 10 to 20 N. Thinner width piston ring has attracted attention as a measure to improve the lubricating-oil consumption. It has a small section modulus and improved conformability to follow the profile of the cylinder-wall surface, and hence can lower the lubricating-oil consumption.

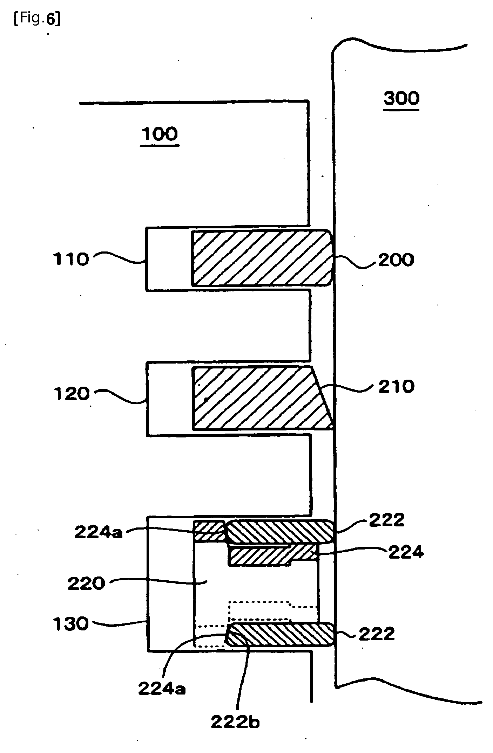

Referring to Fig.6, the cross sectional construction of a general piston ring is shown. A piston 100 is provided with ring grooves 110, 120, 130 for mounting the piston rings therein. Two pressure rings 200, 210, the main purpose of which is to seal gas, and a set of the combined oil-control ring 220, the main purpose of which is to control and to seal lubricating oil, are mounted in these ring grooves. Along with the reciprocating movement of the piston 100, these rings are caused to slide at the outer peripheral surfaces thereof on the inner wall of the cylinder 300.
The three-piece type combined oil-control ring shown in Fig. 6 consists of a pair of the upper and lower side rails 222, and a spacer expander 224, which is located between the side rails 222, and pushes the side rails from their inner peripheral side to generates the tension of the side rails 222.

The spacer expander shown in Fig. 6 is of a corrugated form in axial direction. Another shape of the spacer expander 224 is of a corrugated form in radial direction. These constructions are fundamentally identical with regard to supporting the side rails 22 and generating the tension of the side rails.
The ears (pushing portions 224a) of the spacer expander 224 push the side rails 222 (Fig. 6) so that they (222) are pressed radially toward the cylinder wall and axially toward the upper and inner surfaces of a ring groove. The angle of the ears 224a determines the components of the pressing force. The side rails, therefore, perform such seal function that the inner cylinder wall and the upper and lower surfaces of a ring groove are sealed by the side rails. Particularly, the three-piece type combined oil-control ring with a thin width has been started to use widely as the construction to reduce the lubricating oil consumption.
However, with regard to the three-piece type combined oil-control ring as described above, when wear occurs on either the outer peripheral surfaces 222a of the side rails in sliding contact with the cylinder wall or the mutually contacted inner peripheral surfaces 222b of the side rails and ears 224a of the spacer expander, the pressing force of the spacer expander acting on the side rails decreases so that the oil scraping function of the side rails is lowered. In most cases, the wear of the ears (224a) is greater than that of the inner peripheral surface (222b) of the side rails. In the recent tendency to decrease the tension, deterioration in the oil scraping function due to the wear of the ears (224a) leads to increase of lubricating-oil consumption.

Generally, a film of the lubricating oil is present between the outer peripheral surface of the side rails and the cylinder wall surface. But satisfactory oil film is not present between the inner peripheral surfaces of the side rails and the ears of the spacer expander, that is, the boundary lubricating condition. In addition, since the sliding speed is almost zero, the wear condition is severe.

In addition, when the lubricating oil burns together with the fuel, carbon-based combustion products are formed and mixed with the lubricating oil, circulating within the engine block. Since the oil-control ring has a complicated shape, these combustion products are liable to deposit on the oil-control ring. The once-deposited combustion products impede the oil flow there, and, in turn, the combustion products further build up. Temperature in the vicinity of the oil ring is in the range of from 100 to 150 °C. In the most serious cases, the sticking of the oil-control ring to the piston occurs. As a countermeasure against the sticking, it is effective to enlarge the clearance of the ring groove, that is, the difference between the width of the oil-ring groove of a piston in the axial direction and the width of an oil-control ring. However, with the enlargement of the clearance, the axially vibrating amplitude of the side rails in the oil-ring groove also increases with the axial movement of the piston. Therefore, such problems as groove wear, seal deterioration, and even vibration noise are incurred. These factors limit enlargement of the clearance.

Generally, the martensitic stainless steel of the side rails has been gas-nitrided or ion-nitrided, and the austenitic stainless steel of the spacer expander has been soft-nitrided as a countermeasure against the wear of the oil-control ring. An example of the soft nitriding or gas-nitriding applied to a spacer expander is disclosed in Japanese Published Patent Application (kokai) Nos. Sho 56-66429 (patent document No. 1), Sho 56-66430 (patent document No. 2), Sho 57-206752 (patent document No. 3), Sho 58-5456 (patent document No. 4), Sho 60-116844 (patent document No. 5), Hei 5-33866 (patent document No. 6), and Hei 6-235461 (patent document No.7). An example of gas-nitriding applied to the side rails is described in Tribologist Vol. 44, No. 3(1999), page 19 (non-patent document No. 1).

Practical problems of nitriding the austenitic stainless steel used for a spacer expander reside in the points that the dense passivation film on the surface must first be reduced to initiate the nitridation, and further, the nitriding speed is extremely slow due to the face-centered cubic (fcc) structure of the austenitic iron. It is heretofore known that the nitriding micro-structure of the austenitic stainless steel is mainly composed of chromium nitride and iron nitride.
Researches in the 1970s and later, elucidated the following knowledge. As ICHII, Kazuo, FUJIMURA, Norio, and TAKASE, Takao reported in Netsushori (Heat Treatment) Vol. 25, No.4 (8) pages 191 - 195, 1985 (Non-patent document No. 2), when the ion nitriding is carried out under the conditions of 400°C, 4 hours, and N₂ : H₂ = 1 : 9, a (Fe, Cr, Ni, ···)₄N phase is formed. This phase is resistant against acid corrosion and is named by ICHII et al. as the S phase. This phase has peaks at 2 θ =40° and 2 θ = 46° by the Cu-K a X-ray diffraction.
TERAKADO reported in an abstract of the 105th meeting of Surface Engineering Society, "New Function Property of Low-Temperature Nitriding Process" pages 391 ~ 394 (accepted on February 8, 2002) (non-patent document No. 3) a boundary condition, namely, whether the S phase mentioned above is present or CrN precipitates depending upon the nitriding temperature and the nitriding time with regard to AISI 304, 316, 321. From the reported result, it is interpreted that in the case of AISI304, the S phase cannot be present unless the nitriding temperature is 450°C or lower. According to GENBA Kuniyoshi's article in Hyomen Gijyutsu (Surface Treatment Technique), Vol. 54, No.3, pages 193 - 199, 2003 , the S phase was detected by the NH₃ nitriding at a low temperature of 415°C or 420°C. Only the above-mentioned prior arts are available.
Patent Document No. 1:Japanese Published Patent Application (kokai) No. Sho 56-66429
Patent Document No. 2: Japanese Published Patent Application (kokai) No. Sho 56-66430
Patent Document No. 3: Japanese Published Patent Application (kokai) No. Sho 57 206752
Patent Document No. 4: Japanese Published Patent Application (kokai) No. Sho 58-5456
Patent Document No. 5: Japanese Published Patent Application (kokai) No. Sho 60-116844
Patent Document No. 6: Japanese Published Patent Application (kokai) No. Hei 5-33866
Patent Document No. 7: Japanese Published Patent Application (kokai) No. Hei 6-235461
Non-patent Document 1: Tribologist Vol. 44, No. 3(1999), page 19.
Non-patent Document 2: ICHII, Kazuo, FUJIMURA, Norio, TAKASE, Takao, "Surface Layer Structure and Corrosion Resistance as well as Hardness of Ion-nitrided 18-8 Stainless Steel" Netsushori (Heat Treatment) Vol. 25, No.4 (8) pages 191 - 195, 1985, Non-patent Document 3: TERAKADO, Kazuyoshi, "New Function Property of Low-Temperature Nitrding Process", abstract of the 105th lecture meeting of Surface Engineering Society, page 391-394 (accepted on February 8, 2002)
Non-patent Document 4: GENBA, Kuniyoshi, "Gas Nitriding and Growth Mechanism of the Nitriding Surface Layer of Austenitic Stainless Steel", Hyomen Shori Gijyutsu (Surface Treatment Technique), Vol. 54, No.3, pages 193 - 199, 2003

US-A-4 407 515 discloses a combined oil ring comprising a steel spacer expander and two steel side rails, which has excellent wear resistance and can be used in, for example, an internal combustion engine. The spacer expander and the side rail have specific structures procuded by applying a low temperature gas nitriding treatment.

JP 2002 047554 A discloses nitride-layer-coated austenitic iron-base alloy. The iron-base alloy has a first nitride layer composed essentially of Cr and N and a second nitride layer having M₄N-type face-centered cubic structure and 0.38-0.40 nm lattice constant. Moreover, the thickness of the first nitride layer is 5-200 nm; the thickness of the second nitride layer is 0.5-20 µm; and the first nitride layer is located on the side nearer to the surface of the iron-base alloy than the second nitride layer. For example, the alloy is set in an ion nitriding furnace, held at 300-450°C for ≥3 h, and subjected to ion nitriding at 400-950 V applied voltage under 0.7×10² to 13.3×10² Pa holding pressure. This nitride-layer-coated austenitic iron-base alloy can also be obtained by using gas nitriding. In this alloy, no rusting is observed even after a lapse of 100 h at the salt spray test of JIS Z 2371 and practically no decomposition of the secondary nitride takes place even if heating is done at 500°C for 2 h.

### Disclosure of Invention

Salt bath-nitriding or gas nitriding usually employed to a spacer expander is to hold a work piece at 550 to 600°C for approximately 1 hour. The resultant nitriding surface layer consists of a CrN phase, Fe₄N phase (referred to γ' phase) and other phases. This nitriding surface layer has poor corrosion-resistance and wear-resistance under the use environment of a piston ring described in the beginning part of this description. Therefore, the corrosion wear is particularly serious even in a gasoline engine, where leaded gasoline is used or a few hundred (300 - 500) ppm of sulfur is added to the gasoline. Consequently, the corrosion wear of the nitrided spacer expander advances at the ears (224a, Fig. 6), thereby resulting in decrease of tension and hence in increase of the oil consumption. Fine and hard particles of the combustion products may be present between the inner peripheral surfaces (226b, Fig. 6) and the ears (224a, Fig. 6) of the nitrided spacer expander, and suddenly increase the wear of ears. Furthermore, a direct injection system is recently employed in a gasoline engine as a means for enhancing the fuel efficiency. In such an engine, since the gasoline is liable to be mixed with the lubricating oil, the lubricating requirement becomes more severe.

In addition, the conformability of an oil-control ring following the profile of a cylinder-wall surface is improved by thinning the width of the ring and the lubricating-oil consumption is improved, as described hereinabove. However, such foreign matters as fine combustion products are deposited and built up on the oil-control ring and become difficult to flow out. This results in not only suddenly increased wear at contact between the inner peripheral surface of the side rails and the ears of the spacer expander. But that results also incur the so-called "stick phenomenon" in that the built-up combustion products deposits are adhered between the spacer expander and the side rails supported by the spacer expander and impede transmission of tension from the spacer expander to the side rails. The oil scraping function is, therefore, impaired. Furthermore, excessive lubricating oil scraped by the side rails passes through an opening (window) between each corrugated pitch of the spacer expander, and is then discharged via an oil hole provided in the ring groove into the interior of a piston. The lubricating oil then circulates. When the built-up deposits on the side rails and the spacer expander increase, the circulation passage of the lubricating oil is narrowed with the result that oil consumption increases.

As is described hereinabove, a nitriding surface layer mainly composed of CrN and Fe₄N (γ') phases is formed on the ears of the spacer expander of a low-tension oil-control ring for the purpose of improving fuel efficiency, by means of soft-nitriding or gas-nitriding. A problem involved in such a ring is that (a) since the ears wear out and the tension decreases, satisfactorily long life of the oil scraping function cannot be guaranteed in engines of various specifications and operated under various conditions. (b) In addition, since the built-up combustion products deposits are adhered on the spacer expander and the side rails, a problem is incurred in that the tension is not transmitted to the side rails, and the oil-sealing function is hence impaired, thus increasing the consumption of lubricating oil. Another problem (c) resides in the fact that the passage of the lubricating oil is impeded by the built-up combustion products deposits and thus consumption of the lubricating oil increases.

It is, therefore, an object of the present invention to improve the wear resistance of the ears of a spacer expander in contact with the inner peripheral surface of the side rails and to provide a low-tension three-piece type combined oil-control ring which does not incur tension decline (c.f. (a), mentioned above).

Heretofore, it has been believed that the so-called S phase cannot be stably present at a temperature of approximately 703K (430°C) or higher and is transformed into a nitride. Corrosion resistance of austenitic stainless steel thus deteriorates (page 21 of GENBA,"Hyomen Shori Gijutsu", ditto). The present inventors applied salt-bath nitriding and gas nitriding to spacer expanders made of SUS 304 at 570°C for 30 minutes and identified the constituent phases of the nitriding surface layer. A notable fact discovered at that instance is that, no matter if the gas nitriding is carried out at a temperature as high as 570°C, the (Fe, Cr, Ni, ···)₄N phase, which is reported as the S phase by ICHII et aL and TERAKDO, is formed. Another notable fact is that the spacer expander, in which the S phase is formed, exhibits improved wear resistance in practice. That is, the present inventors discovered that the (Fe, Cr, Ni, ···)₄N phase is not formed by the salt bath-nitriding but is formed by the gas-nitriding at a temperature as high as 570°C. The present inventors considered the reason for this as follows. The standard formation free energy of Fe₃C is lower than that of Fe₄N. Under the nitriding environment, where the carbon and nitrogen are co-present, the cyanide (NaCN) or cyanate (NaCNO) used, for example, for the salt bath-nitriding, behaves as the carbon source, because of the free energy change described above. Formation of Fe₄N is impeded in the work pieces. Fe₄N contributes like a kind of nucleus for the formation of the (Fe, Cr, Ni, ···)₄N phase..

Therefore, the oil-control ring of the present invention is an oil-control ring consisting of a spacer-expander and a pair of side rails supported by the spacer expander, wherein at least ears of the spacer expander made of austenitic stainless steel in contact with inner peripheral surfaces of the side rails are subjected to nitriding to form a 10 to 60 µm thick nitriding surface-layer characterized in that a phase having peaks at 2θ=40° and 2θ=46° by Cu-Kα X-ray diffraction is formed in the nitriding surface layer by a gas-nitriding at a temperature of 470°C or higher.

In the case of gas-nitriding, such carbon source as the cyanide (NaCN) and cyanate (NaCNO) are absent, while gas nitriding containing or consisting of NH₃ is used at a temperature of 470°C or higher. The balance of NH₃ is H₂, N₂ or the like. The (Fe, Cr, Ni, ...)₄N phase is formed in the gas nitriding according to the present invention but is not formed in the salt-bath nitriding. This does not occur in the salt bath-nitriding. The (Fe, Cr, Ni, ...)₄N phase includes the solute Cr and is highly corrosion-resistant against acid. During the nitriding, decomposition reaction of the (Fe, Cr, Ni, ...)₄N phase occurs with the lapse of time and the CrN phase precipitates. Therefore, Cr in the matrix decreases and its corrosion resistance is impaired. When the nitriding treatment is carried out at high temperature for prolonged time, the (Fe, Cr, Ni, ...)₄N phase, which is corrosion resistant, disappears, and the corrosion resistance is impaired due to precipitation of CrN phase. The treatment must, therefore, be carried out under the condition where the (Fe, Cr, Ni, ...)₄N phase remains. It is essential in the present invention that a (Fe, Cr, Ni, ...)₄N phase having peaks at 2θ =40° and 2θ = 46° by a Cu-K a X-ray diffraction is present. It is preferred under the corrosive environment that at least 30 % by volume of the (Fe, Cr, Ni, ...)₄N phase is contained in the nitriding surface layer. According to the experiments by the present inventors, the gas nitriding should be carried out at 470°C or higher for 10 minutes or longer. The treatment time should be shorter as the temperature is higher, as long as the required thickness of the nitriding surface layer is obtained, since the (Fe, Cr, Ni, ...)₄N phase may disappear at a longer treating time. From the viewpoint of process control, lower temperature processing is, therefore, preferred to shorter time processing. The (Fe, Cr, Ni, ...)₄N phase may be formed by the gas nitriding at a temperature lower than 470°C However, the nitriding thickness is very thin, or the nitriding time is impractically long.

The lines of X-ray diffraction of the (Fe, Cr, Ni, ...)₄N phase are not identified by the ASTM cards but Cu-Kα X-ray diffraction generates the first peak in the vicinity of 2θ=40° and the second peak in the vicinity of 2θ=46° . Both of these peaks shift to lower or higher angles depending upon the solute amount of nitrogen. The expression of Ni, ... indicates that the elements of the austenitic stainless steel other than Ni may be dissolved.

The nitriding surface layer according to the present invention is from 10 to 60 µm thick. When the thickness of the nitriding surface layer is less than 10 µm, the durability is unsatisfactory. On the other hand, when the thickness of the nitriding surface layer is more than 60 µm, the tension so greatly varies that the mass production of piston rings within a predetermined tolerance range becomes difficult. Enlargement of tension variation is attributable to the fact that the Young's modulus increases and the unfolded length (the length in circumference length) increases due to the nitriding. In addition, the (Fe, Cr, Ni, ...)₄N phase disappears because of the long treatment time. Thickness of the nitriding surface layer according to the present invention includes thickness of the diffusion layer described hereinbelow.

The nitriding surface layer according to the present invention has satisfactory hardness in the light of wear resistance. Hardness is measured at the outermost surface by a Vickers hardness of 25 g of load. The hardness of the nitriding surface layer is from Hv 1000 to Hv 1500.
In addition, the material, on which the nitriding surface layer is formed, is an austenitic stainless steel. In nitriding the austenitic stainless steel, a thin diffusion layer is typically formed in most case and has relatively low hardness. Allegedly, when the wear advances to such an extent that this diffusion layer is exposed, the wear proceeds rapidly. According to the present invention, the object is attained by the presence of a compound layer, that is, the (Fe, Cr, Ni, ...)₄N phase having peaks at 2 θ = 40° and 2 θ =46° by Cu-Kα X-ray diffraction. Presence of the diffusion layer next to the base material is, therefore, not important.

In addition, the present invention provides low-tension three-piece type combined oil-control ring which does not cause a deterioration in the oil sealing function due to sticking by preventing the combustion products from building up and depositing on the surfaces of the side rails and spacer expander, and which maintains a high oil controlling function by ensuring a passage of excessive oil scraped from the cylinder wall by means of the side rails.
Namely, the present inventors paid attention to the depositing (adhering) situation of the combustion products on the surfaces of the oil-control ring. The present inventors then conceived an idea that, when a chemically stable coating film is present on at least the surfaces of the spacer expander of the three-piece type combined oil-control ring, said surfaces being faced to the side surfaces of the side rails, or on at least the surfaces of the side rails, being faced to the spacer expander, the sticking between the side rails and the spacer expander can be prevented. In addition, the passage of excessive lubricating oil, which is scraped from the cylinder wall by the side rails, can be ensured.

With a resin coating film being formed on at least surfaces of the spacer expander faced to the side surfaces of the side rails or on at least surfaces of the side rails faced to the spacer expander, there is provided the advantage of a low-tension three-piece type combined oil-control ring which does not cause a deterioration due to sticking in the oil sealing function by preventing the combustion products from building up and depositing on the surfaces of the side rails and spacer expander, and which maintains a high oil controlling function by ensuring a passage of excessive oil scraped from the cylinder wall by means of the side rails (c.f., (b), (c) mentioned above). Namely, the present invention provides a low-tension three-piece combined oil control-ring, which has high oil-controlling function and improved durability in engines of various specifications and under the conditions of various lubricating oils and fuels.

The location where the combustion products are mostly liable to deposit (adhere) is between the ears of a spacer expander and projections on the outer peripheral portions of the spacer expander supporting the side rails. A resin coating film on the spacer expander covers at least said location. In addition, the resin coating film, which covers the surfaces of the side rails faced to the spacer expander, is also effective. Evidently, coating on both surfaces is more effective.

The nitriding of the ears of the spacer expander mentioned above, and the resin coating at least on the surfaces of the spacer expander faced to side surfaces of the rails or at least on the surfaces of the side rails faced to the spacer expander may be combined to further enhance the effectiveness.

### Brief Explanation of Drawings

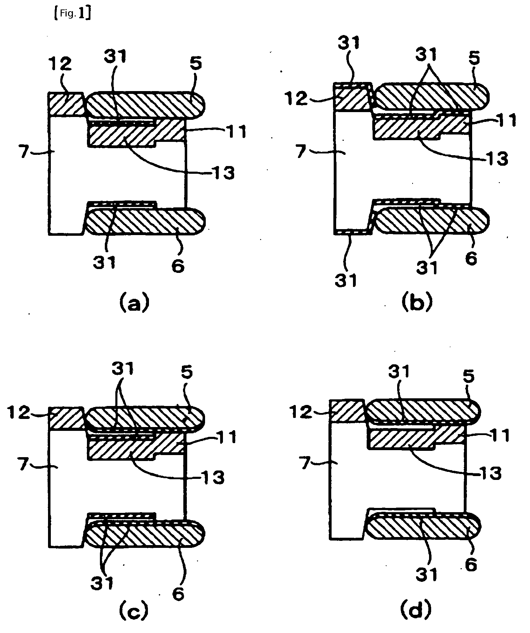

[Figure 1] Drawings for showing the three-piece type combined ol-control rings according to the present invention. Ditto (a) is a cross-sectional drawing showing an example, in which the resin coating film covers only intermediate portion between the ears and the projections on the outer peripheral portion of a spacer expander supporting the side rails. Ditto (b) is a cross-sectional drawing, in which the resin coating film covers the entire surface from the ears to the projections on the outer peripheral portion of a spacer expander. Ditto (c) is a cross sectional drawing, in which the resin coating film covers an intermediate portion between the ears of the spacer expander and the projections of the outer peripheral portion of the spacer expander as well as the side surfaces of the side rails faced to the spacer expander. Ditto (d) is a cross-sectional drawing, in which the resin coating film covers only the side surfaces of the side rails faced to the spacer expander.
[Figure 2] X-ray diffraction charts of Example 1 (J1), in which the gas nitriding was carried out under the condition of 570°C for 30 minutes. The charts of the respective depths of the nitriding surface layer are compared.
[Figure 3] X-ray diffraction charts of Example 2 (J2), in which the gas nitriding was carried out under the condition of 530°C for 30 minutes. The charts of the respective depths of the nitriding surface layer are compared.
[Figure 4] X-ray diffraction charts of Comparative Example 1 (H1), in which the salt bath-nitriding was carried out under the condition of 570°C for 30 minutes. The charts of the respective depths of the nitriding surface layer are compared.
[Figure 5] Optical micro-photographs of the nitriding surface layer. Ditto (a) shows a micro-photograph of Comparative Example 2 (H2) gas-nitrided at 450°C for 60 minutes. Ditto (b) shows a micro-photograph of Example 9 (J9) gas-nitrided at 530°C for 30 minutes.
[Figure 6] A cross-sectional drawing of a piston, to which the conventional piston rings are mounted and which is positioned within a cylinder. The oil-control ring shown in the drawing is a typical three-piece type combined oil-control ring with a corrugated form in the axial direction.

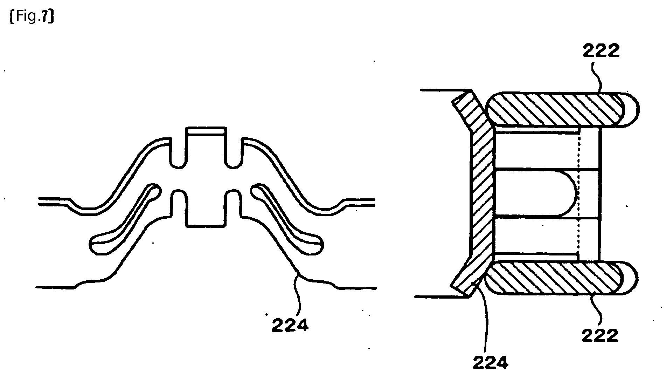

[Figure 7] A drawing showing a conventional typical three-piece type combined ol-control ring having a corrugated form in the radial direction.

### Best Mode for Carrying Out Invention

Figure 1 schematically illustrates an embodiment of the present invention by way of an example showing the location on the three-piece type oil-controlling ring where the resin coating film 31 is formed. In Fig. 1(a), the resin coating film 31 covers only intermediate portions between the ears and the projections on the outer peripheral portion of a spacer expander supporting the side rails. In Fig. 1(b), the resin coating film 31 covers the entire surface from the ears to the projections on the outer peripheral portions of a spacer expander. In Fig. 1(c), the resin coating film 31 covers intermediate portions between the ears and the projections of the outer peripheral portions of a spacer expander supporting the side rails as well as the side surfaces of the side rails faced to the spacer expander. In Fig. 1(d), the resin coating film 31 covers only the side surfaces of the side rails faced to the spacer expander.

In the present invention, the resin coating film is preferably from 0.5 to 20 µm of thickness. The resin coating film, which covers the projections of a spacer expander, the side surfaces of the side rails and the like, exerts influence upon the clearance with respect to a ring groove. The coating thickness on such locations is preferably from 1 to 10 µm.

The resin coating film according to the present invention is chemically stable, and non-adhesive to the carbon-based combustion products. Any of resins can be used provided that it is heat-resistant at a temperature of approximately 150°C. Preferably, fluorocarbon resin, polyamideimide (PAI), polyimide, polyvinyl chloride, polyester resin and the like are used. A low friction coefficient and self lubricating property are desirable properties in addition to the chemical stability and non adhesive property. From the viewpoint of the former properties, fluorocarbon resin is preferably used. Although the fluorocarbon resin is chemically stable, of excellent non-adhesiveness, highly heat-resistant, of low-coefficient of friction, and excellent self-lubrication, it is extremely difficult to form the coating film of the fluorocarbon resin alone because of its poor adhesive property. Therefore, a composite of fluorocarbon resin and a binder should be used. For the binder, such heat-resistant resin as the polyamideimide (PAI), polyimide, polyvinyl chloride, polyester resin and the like can be used. Appropriate fluorocarbon resin content is 70% by weight or less in the light of the effects of the binder and the like. From the availability of the fluorocarbon resin, polytetrafuoroethylene (PTFE), perfluoroalkoxy-alkane, (PFA), perfluoroethylene propenecopolymer (FEP) can be easily utilized. From the viewpoint of lubricating property, 35% by weight of solid lubricant such as molybdenum disulfide (MoS₂), boron nitride (BN), C (graphite) may be contained. In addition, 35% by weight of catalyst particles of titanium oxide (TiO₂), Cl2A7 compound (12CaO · 7Al₂O₃), etc., which have a carbon decomposing function, may be dispersed in the coating film mentioned above.

A nitriding method of austenitic stainless steel, which can be applied to nitriding the oil-control ring of the present invention, employs gas-nitriding at a temperature of from 470 to 600°C in gas atmosphere of NH₃ and N₂ to form a (Fe, Cr, Ni, ....)₄N phase, and subsequently, the gas-nitriding is stopped prior to disappearance of the (Fe, Cr, Ni, ....)₄N phase. According to the experiments by the present inventors, appropriate nitriding time is from 10 minutes to 1 hour. At nitriding temperature lower than 470°C, the nitriding time required for forming a 10 µ m or more thick nitriding surface layer is 1 hour or longer. At nitriding temperature higher than 600°C, decomposition of the (Fe, Cr, Ni, ....)₄N phase proceeds fast and this phase may disappear. The nitriding time herein is evidently dependent upon the size of the nitriding furnace, the treated quantity and the like, and hence is not very limited.

It is essential in nitriding the austenitic stainless steel to reduce the passivation film. Conventional halide-addition method can be used for the reduction. But a reducing agent containing a carbon source such as CN- ions and the like cannot be used because it impedes the formation of the (Fe, Cr, Ni, ....)₄N phase. In order to stably form the objective nitriding surface layer, the nitriding furnace is desirably of muffle structure, and the furnace interior should be evacuated prior to the reducing and nitriding treatment mentioned hereinabove.

In a preferred embodiment of the oil-control ring of the present invention, the resin coating film can be conveniently formed by spray-coating. Evidently, electrostatic coating, immersion coating, screen-printing, pad printing and the like can also be utilized. Prior to the coating, appropriate viscosity adjusting should be carried out by using a solvent. The solvent should dissolve the resin and should vaporize at a temperature at which the resin does not decompose. In the case of containing the fluorocarbon resin, it is important that the solvent should not dissolve the fluorocarbon resin but should dissolve only the binder. When the polyimide or polyamide imide is selected as the resin material or binder, solvent, which can be conveniently used, is mainly composed of N-methyl-2-pyroridinon (pyroridone) and added xylene or the like. In the case of mixing the fluorocarbon resin and solid lubricant, it is important that the binder is dissolved in the solvent in a predetermined amount, mixed and satisfactorily uniformly stirred with the fluorocarbon resin and solid lubricant. In addition, appropriate coating thickness of the resin coating film is from 0.5 to 20µm. The viscosity of the resin should be satisfactorily low depending upon the coating method employed.

The following is explanation of the effects of the present invention. The (Fe, Cr, Ni, ....)₄N phase of the nitriding surface layer of the oil-control ring according to the present invention is hard and corrosion-resistant, and, therefore, does not incur corrosion wear even in the case of using leaded gasoline or incorporating a few hundred (300 - 500) ppm of sulfur into the gasoline and under severe lubricating conditions. Accordingly, the wear resistance of the ears of the spacer expander in contact with the inner peripheral surface of the side rails is outstandingly improved.

The inventive low-tension three-piece type combined oil-control ring does not cause a deterioration in the oil sealing function, because the combustion products are prevented from building up and depositing on the surfaces of the side rails and spacer expander. The low-tension oil-controlling maintains a high-oil function by ensuring a passage of excessive oil scraped from the cylinder wall by means of the side rails.

In addition, since a resin coating film is formed on at least surfaces of the spacer expander faced to the side surfaces of the side rails or on at least surfaces of the side rails faced to the spacer expander of an oil-control ring provided by the present invention, it became possible that a low-tension three-piece type combined oil-control ring which does not cause a deterioration in the oil sealing function due to sticking by preventing the combustion products from building up and depositing on the surfaces of the side rails and spacer expander, and which maintains a high oil controlling function by ensuring a passage of excessive oil scraped from the cylinder wall by means of the side rails, is provided.

In addition, the countermeasures against the wear of ears and the sticking may be implemented simultaneously in the oil-control ring according to the present invention. A low-tension three-piece oil-control ring according to the present invention has high oil-controlling function, is highly durable and reduces the lubricating oil consumption in engines with various specifications and under the conditions of various lubricating oil and fuels. The most general SUS304 is indicated as an example of the austenitic stainless steel. Evidently, the present invention can be applied to modified SUS 304, SUS 316, SUS321 and the like.

The present invention is explained more in detail with reference to the examples.
The best mode for carrying out the invention is described in detail hereinafter with reference to specific examples. Incidentally, an example of the spacer expander described in the following examples has a corrugated form in the axial direction. Evidently, the present invention is not limited to a spacer expander having the shape mentioned above and can be applied to a spacer expander having a corrugated form in the radial direction.

### Examples 1 - 2 (J1 - J2) and Comparative Example 1 (H1)

A rolled strip (SUS 304 material) having 2.70 mm of width, 0.25 mm of thickness and 20 mm of length for use as a spacer expander was cut into samples. These samples were degreased, rinsed and subsequently gas-nitrided at 570°C and 530°C for 30 minutes in the atmosphere of NH₃ 90% and N₂ 10%. For the nitriding, a muffle structure furnace was used. Once the furnace interior was evacuated and then the temperature was increased. Prior to nitriding, the reduction of passivation film was carried out by means of adding a predetermined amount of ammonium chloride at predetermined timing.

For comparison purposes, the same samples were degreased, rinsed and then salt bath-nitrided at 570°C for 30 minutes.

After the nitriding, for confirming the crystal structural change in the depth direction of the nitriding surface layer, the samples were subjected to electropolishing in the electrolyte consisting of phosphoric acid, oxalic acid and gelatin under the conditions of 5mA/mm² of current density and 25 to 30°C, so as to remove a predetermined thickness of the nitriding surface layer. The X-ray diffraction analysis was then carried out. Using Cu-K α X-ray of 40kV and 30 mA, the constituent phases of the nitriding surface layer were qualitatively analyzed by the procedure described above.

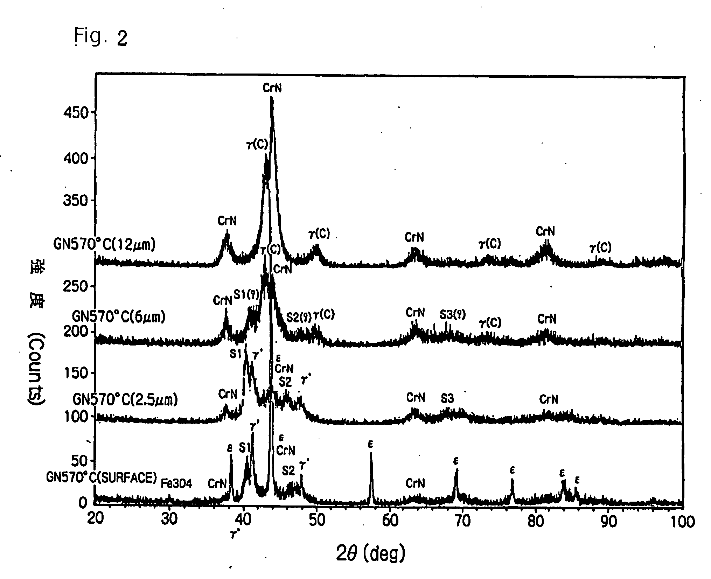

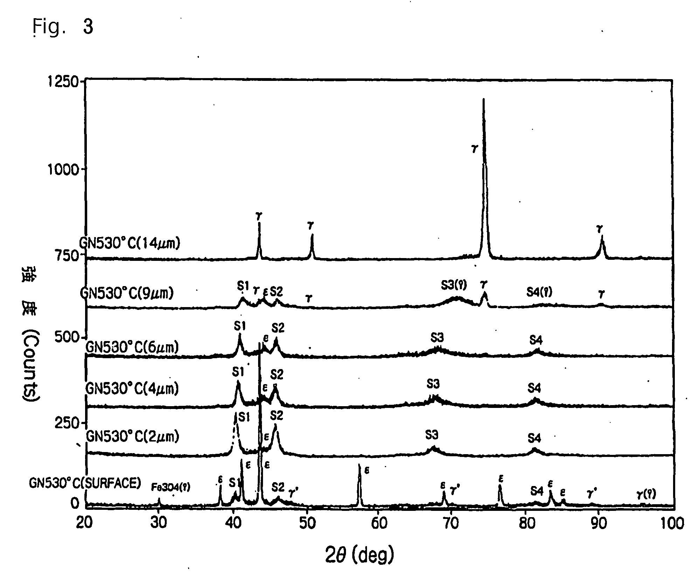

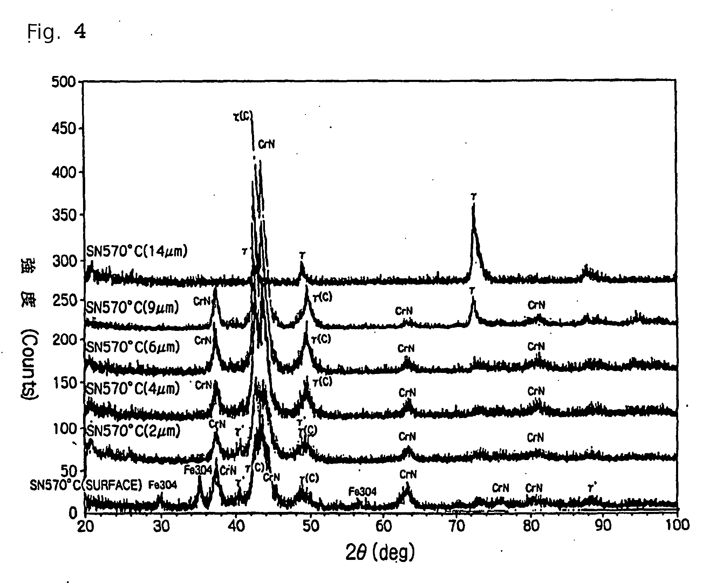

Referring to Fig. 2 are shown the X-ray diffraction results of Example 1 (J1) at respective depths of the nitriding surface layer gas-nitrided at 570°C for 30 minutes. Referring to Fig. 3, are shown the X ray diffraction results of Example 2 (J2) gas nitrided at 530°C for 30 minutes. Referring to Fig. 4, are shown the X-ray diffraction results of Comparative Example 1 (H1) salt bath-nitrided at 570°C for 30 minutes. These results are collected in Table 1

**[Table 1]**

| Constituent Phases of Nitriding Surface Layer of Examples 1 - 2, and Comparative Example 1 | | | |
|---|---|---|---|
| | Example 1 (J1) | Example 2 (J2) | Comparative Example 1 (H1) |
| Nitriding Condition | 570°C, 30 min | 530°C, 30 min | 570°C, 30 min |
| Thickness of Nitriding Surface layer | 23µm | 16 µm | 14µm |
| Outermost Surface | ε, CrN, γ', S1, S2 Fe₃O₄ | ε, S1, S2, γ', Fe₃O₄ | CrN, γ, γ', Fe₃O₄ |
| 2 *µ*m from Surface | S1, S2, γ', CrN, S3 | S1, S2, ε, S3, S4 | CrN, γ, γ' |
| 4 *µ* m from Surface | - | S1, S2, ε, S3, S4 | CrN, γ |
| 6 *µ*m from Surface | γ, CrN,S1, S2, S3 | S1, S2, ε, S3, S4 | CrN, γ |
| 9 *µ*m from Surface | - | S1, S2, ε, γ, S3, S4 | γ, CrN |
| 14 *µ* m from Surface | CrN, γ | γ | γ |

In Table 1, it is believed that the ε phase is (Fe, Ni, ...)₂₋₃N phase; the γ' phase, is (Fe, Ni, ....)₄N phase; and, the γ phase is austenitic iron of SUS 304. According to the X-ray diffraction, S1 has a peak in the vicinity of 2 θ =40° and S2 has a peak in the vicinity of 2θ =46° . In the literature heretofore, the (Fe, Cr, Ni, ....)₄N phase, which is referred to as the so-called S phase, was obtained only at a low-temperature nitriding at 450°C or lower. It is understood that this phase is obtained even at high temperature as high as 570°C, provided that the nitriding treatment is stopped before disappearance of said compound phase formed. Contrary to this, in the case of salt bath-nitriding, the formation of the (Fe, Cr, Ni, ....)₄N phase is impeded due to the presence of the carbon source, and, hence the (Fe, Cr, Ni, ....)₄N phase does not appear at all.

### Examples 3 - 18 (J3 - J18) and Comparative Examples 2 - 3 CH2 - H3)

A rolled strip (SUS 304 material) having 2.70 mm of width, 0.25 mm of thickness and 20 mm of length was cut into samples as in Example 1. These samples were degreased, rinsed and gas-nitrided in the same atmosphere as Example 1 and under the conditions of temperature and holding time shown in Table 2. Reduction of the passivation film was also carried out as in Example 1. The nitrided samples were subjected to the optical microscope observation of a cross-section of the samples to obtain thickness of the nitriding surface layer and the area ratio (using image analyzer) of the (Fe, Cr, Ni, ...)₄N phase. The samples were etched by a Marble liquid so as to make the decomposed (Fe, Cr, Ni, ...)₄N phase, i.e., to make CrN phase and γ' phase visibly black. The so-etched samples were photographed. In addition, the Vickers hardness of the outermost surface of the nitriding surface layer under the load of 25g was measured. The results are shown in Table 2.

**[Table 2]**

| Thickness and Hardness of Nitriding Surface Layer, as well as Area Ratio (%) of (Fe, Cr, Ni, ...)₄N Phase under Respective Nitriding Conditions. | | | | | |
|---|---|---|---|---|---|
| | Nitriding Condition | | Nitriding Surface Layer | | Area Ratio (%) of (Fe, Cr, Ni, ...)N, phase |
| | Temperature (°C) | Time (minute) | Thickness (*µ*m) | Hardness (Hv) | |
| H2 | 450 | 60 | 7 | 1260 | >98 |
| J3 | 470 | 60 | 10 | 1090 | >98 |
| J4 | 490 | 60 | 13 | 1180 | 85 |
| J5 | 510 | 60 | 21 | 1240 | 73 |
| J6 | 510 | 40 | 16 | 1220 | 82 |
| J7 | 530 | 60 | 25 | 1290 | 56 |
| J8 | 530 | 40 | 20 | 1250 | 63 |
| J9 | 530 | 30 | 16 | 1230 | 68 |
| J10 | 550 | 60 | 34 | 1280 | 46 |
| J11 | 550 | 30 | 19 | 1220 | 49 |
| J12 | 550 | 15 | 11 | 1050 | 53 |
| J13 | 570 | 60 | 41 | 1230 | 38 |
| J14 | 570 | 30 | 23 | 1230 | 41 |
| J15 | 570 | 15 | 13 | 1180 | 43 |
| J16 | 590 | 60 | 53 | 1250 | 31 |
| J17 | 590 | 30 | 29 | 1210 | 35 |
| J18 | 590 | 10 | 11 | 1030 | 37 |
| H3 | 610 | 30 | 35 | 1200 | 26 |

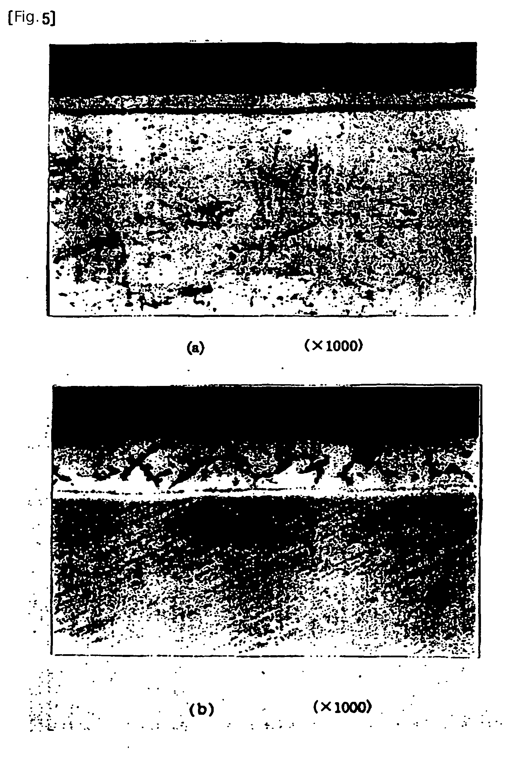

Representative examples of the nitriding surface layer's micro-structure are shown in the following photographs: Fig. 5(a) - an optical micro-photograph of the nitriding surface layer of Comparative Example 2 (H2) treated at 450°C for 60 minutes; and Fig. 5(b) - an optical micro-photograph of the nitriding surface layer of Example 9 (J9) treated at 530°C for 30 minutes. It is apparent from these photographs that under the gas nitriding of 450°C for 60 minutes, the (Fe, Cr, Ni, ...)₄N phase is formed entirely in the nitriding surface layer but is as thin as 7 µm; and, under the gas nitriding at 530°C for 30 minutes, approximately 30% of the (Fe, Cr, Ni, ...)₄N phase is decomposed into the CrN phase and the γ' phase and hence disappears.

### Examples 19 - 24 (J19 -24) and Comparative Examples 4 - 5 (H4 -H5)

In order to evaluate in short time the wear in engines, three-piece type combined oil-control rings were manufactured as follows.

A SUS 304 strip having 2.50 mm of width and 0.25 mm of thickness was shaped into a spacer expander having corrugated form in the axial direction by means of the gear shaping method. The spirally shaped spacer expander blanks were degreased, rinsed and nitrided.

The nitriding condition was as follows: Example 19 - the same as in Example 4; Example 20 - the same as in Example 5; Example 21 - the same as in Example 7; Example 22 - the same as in Example 10; Example 23 - the same as in Example 13; : Example 24 - the same as in Example 16; Comparative Example 4 - the same as in Comparative Example 2; and, Comparative Example 5 - the same as in Comparative Example 1.

After the nitriding, the steps of cutting into specified length, finishing end surfaces were carried out, thereby producing the spacer expanders having a predetermined bore diameter, combined thickness, combined width, and tension. The spacer expanders were designed to generate a predetermined tension by means of precisely shaping the corrugated form and determining the constant unfolded length.

In addition, the SUS 440B strip having 2.30 mm of width and 0.40 mm of thickness was used for the side rails. This strip was wound into a form of continuously round circle and spiral form having a predetermined dimension of the side rails. The gas-nitriding was carried out to form an approximately 50µm-thick nitriding surface layer. Subsequently, the steps of cutting, lapping of the outer peripheral surface and buff finishing were carried out to produce the side rails.

These three-piece type combined oil-control rings were subjected to the accelerated durability test using leaded gasoline in a gasoline direct-injection type, four-cylinder in-line water-cooled engine of 82.5 mm bore and 2000 cc displacement. After lapse of 250 hours of durability test, the wear amount of the inner peripheral surfaces of the side rails and the wear amount of the ears of the spacer expander were measured. The results are shown in Table 3.

**[Table 3]**

| Results of Durability Test (Measurement of Wear Amount) | | |
|---|---|---|
| | Wear Amount of Inner Peripheral Surfaces of Side Rails (*µ*m) | Wear Amount of Ears of Spacer Expander (*µ*m) |
| J19(J4) | 4 | 6 |
| J20(J5) | 4 | 9 |
| J21(J7) | 6 | 12 |
| J22(J10) | 8 | 14 |
| J23(J13) | 12 | 15 |
| J24(J16) | 14 | 16 |
| H4(H2) | 25 | 48 |
| H5(H1) | 120 | 310 |

The wear amount of the ears of the spacer expander of an oil-control ring according to the present invention is less than 20µm even after lapse of 250 hours of the durability test under the operating conditions mentioned above. The spacer expander according to the present invention exhibits satisfactory durability as compared with the conventional, salt bath-nitrided ears (Comparative Example 5, H15).

### Examples 25 - 37 (J25 - J37*) and Comparative Example 6 (H6)

The same side rails and the spacer expanders as in Example 19 and Comparative Example 5 were used to apply a resin coating film having the composition as shown in Table 4. A predetermined amount of the resin was spray-coated on the predetermined portions and was baked at 210°C. The coating film was thus obtained.
*Examples 36 and 37 (J36 amd J37) are reference examples

These oil-control rings were mounted in a gasoline direct-injection type, four-cylinder in-line water-cooled engine of 2400 cc displacement and were subjected to a durability test using leaded gasoline for 200 hours under accelerating operation mode.

After the durability test, whether a sticking occur or not is shown in Table 4.

**[Table 4]**

| | Results of Durability Test (Presence or Absence of Sticking) | | | | |
|---|---|---|---|---|---|
| | Nitriding Conditions | Composition of Resin Coating Film | Coating Location | Thickness of Coating Film (*µ*m) | Sticking (Deposition Amount) |
| J25 | J19 | PAI | a | 15 | none(middle) |
| J26 | " | PAI | b | 1 | none(middle) |
| J27 | " | PAI | c | 8 | none(small) |
| J28 | " | PAI | c | 5 | none(small) |
| J29 | " | PAI | d | 4 | none(middle) |
| J30 | " | pAI+PTFE(50%) | a | 12 | none(small) |
| J31 | " | pAI+FEP(50%) | a | 9 | none(small) |
| J32 | " | PAI+MoS₂(20%) | a | 18 | none(small) |
| J33 | " | PAI+PTFE(40%)+MoS₂(10%) | a | 10 | none(trace) |
| J34 | " | PAI+PTFE(40%)+TiO₂(10%) | a | 8 | none(trace) |
| J35 | " | pAI+PTFE(40%)+Cl2A710%) | a | 7 | none(trace) |
| J36 | H5 | PAI | a | 6 | none(middle) |
| J37 | " | RAI+PTFE(50%) | b | 4 | none(small) |
| H6 | " | none | - | - | sticking(much) |

| | | | | | |
|---|---|---|---|---|---|
| * Examples 36 and 37 (J36 amd J37) are reference examples | | | | | |

In Table 4, the nitriding condition J19(H5) indicates that the gas nitriding was carried out under the same nitriding conditions of the side rails and spacer expanders as in Example 19 (Comparative Example 5). In addition, the coating locations a, b, c and d indicate (a), (b), (c) and (d) of Fig. 1, respectively. With regard to sticking, "none (middle or small or trace)" indicates that the tension of the oil control-rings does not decline even if some carbon deposition occur. The expression (much, middle, small and trace) indicates the degree of carbon deposition. "Sticking (much)" indicates that the tension of the oil control rings decline due to carbon deposition. In the case of Comparative Example 6 (H6), which is observed sticking (much), oil consumption rate is increased.

According to the present invention, as is described hereinabove, serious sticking problem between the side rails and the spacer expander of the oil-control ring was not observed in the durability test under the operating conditions described above. The oil-control ring according to the present invention is, therefore, satisfactorily durable as compared with the conventional oil-control ring without the resin-coating film.

### [Industrial Applicability]

As is described hereinabove, the three-piece type combined ol-control ring according to the present invention enhances the performance of the oil-control ring used in a gasoline engine or a diesel engine, and contributes to reduce the lubricating oil consumption.

## Claims

1. A combined oil-control ring consisting of a spacer expander (7) and a pair of side rails (5,6) supported by the spacer expander (7), wherein at least ears of the spacer expander made of austenitic stainless steel in contact with inner peripheral surfaces of the side rails are subjected to nitriding to form a 10 to 60 µm thick nitriding surface-layer **characterized in that** a phase having peaks at 2θ=40° and 2θ=46° by Cu-Kα X-ray diffraction is formed in the nitriding surface layer by a gas-nitriding at a temperature of 470°C or higher.

2. A combined oil-control ring according to claim 1, **characterized in that** a resin coating film (31) is formed on at least surfaces of the spacer expander faced to side surfaces of the side rails or on at least surfaces of the side rails faced to the spacer expander.

3. A combined oil-control ring according to claim 2, wherein said resin coating film (31) comprises a fluorocarbon resin.

4. A combined oil-control ring according to claim 2, wherein said resin coating film (31) comprises a solid lubricant.

5. A combined oil-control ring according to claim 2, wherein said resin coating film (31) comprises at least one of TiO₂ and C12A7 compound.

## Patentansprüche

1. Kombinierter Öl-Steuerungsring bestehend aus einem Abstands-Breithalter (7) und einem Paar von Seitenleisten (5, 6) gestützt von dem Abstands-Breithalter (7), wobei wenigstens Ohren des Abstands-Breithalters, die aus austenitischem rostfreiem Stahl gebildet sind, in Berührung mit inneren Umfangsoberflächen der Seitenleisten einem Nitriervorgang unterworfen werden, um eine 10 bis 60 µm dicke Nitrieroberflächenschicht zu bilden, **dadurch gekennzeichnet, dass** eine Phase, die Spitzen bei 2θ=40° und 2θ=46° durch Cu-Kα Röntgenstrahlungsbeugung aufweist, in der Nitrierobenflächenschicht durch Gasnitrieren bei einer Temperatur von 470° C oder höher gebildet wird.

2. Kombinierter Öl-Steuerungsring nach Anspruch 1, **dadurch gekennzeichnet, dass** ein Harzbeschichtungsfilm (31) auf wenigstens einer Oberfläche des Abstands-Breithalters, gegenüber Seitenoberflächen der Seitenleisten oder wenigstens an Oberflächen der Seitenleisten gegenüber dem Abstands-Breithalter ausgebildet ist.

3. Kombinierter Öl-Steuerungsring nach Anspruch 2, wobei dieser Harzbeschichtungsfilm (31) ein Fluorkohlenstoffharz aufweist.

4. Kombinierter Öl-Steuerungsring nach Anspruch 2, wobei der Harzbeschichtungsfilm (31) einen festen Schmierstoff aufweist.

5. Kombinierter Öl-Steuerungsring nach Anspruch 2, wobei der Harzbeschichtungsfilm (31) wenigstens eine der Komponenten TiO₂ und C12A7 aufweist.

## Revendications

1. Anneau racleur d'huile combiné constitué d'un organe expansible d'espacement (7) et d'une paire de rails latéraux (5, 6) supportés par l'organe expansible d'espacement (7), dans lequel au moins des oreilles de l'organe expansible d'espacement en acier inoxydable austénitique en contact arec des surfaces périphériques intérieures des rails latéraux sont soumises à une nitruration pour former une couche de surface de nitruration de 10 à 60 µm d'épaisseur, **caractérisé en ce qu'**une phase ayant des pics à 2θ = 40° et 2θ = 46° par diffraction de rayons X Cu-Kα est formée dans la couche de surface de nitruration par une nitruration gazeuse à une température de 470 °C ou plus.

2. Anneau racleur d'huile combiné selon la revendication 1, **caractérisé en ce qu'**un film de revêtement en résine (31) est formé sur au moins des surfaces de l'organe expansible d'espacement dirigées vers des surfaces latérales des rails latéraux ou sur au moins des surfaces des rails latéraux dirigées vers l'organe expansible d'espacement.

3. Anneau racleur d'huile combiné selon la revendication 2, dans lequel ledit film de revêtement en résine (31) comprend une résine fluorocarbonée.

4. Anneau racleur d'huile combiné selon la revendication 2, dans lequel ledit film de revêtement en résine (31) comprend un lubrifiant solide.

5. Anneau racleur d'huile combiné selon la revendication 2, dans lequel ledit film de revêtement en résine (31) comprend au moins un élément parmi TiO₂ et un composé C12A7.
